# EUROPEAN PATENT SPECIFICATION

(11) **EP 0 645 208 B1**
(45) Date of publication and mention of the grant of the patent: **10.03.1999**
(21) Application number: 94114950.2
(22) Date of filing: 22.09.1994
(51) Int. Cl.: B23B 5/16, B23P 23/00, B23D 21/04

(54) **Cutting-off machine for automatic cutting - off and turning of tubes**
Trennmaschine zum automatischen Trennen und Drehen von Rohren
Tronçonneuse pour le tronçonnage et tournage automatique de tubes

(30) Priority: 24.09.1993 IT VI930152
(43) Date of publication of application: 29.03.1995
(73) Proprietor: TUBES S.R.L., I-36061 Bassano del Grappa (VI) (IT)
(72) Inventor: Farronato, Dino, I-36061 Bassano Del Grappa (VI) (IT)
(74) Representative: Bonini, Ercole

(56) References cited:
- EP-A- 0 103 649
- BE-A- 900 120
- DE-A- 2 015 795
- DE-C- 3 936 176
- DE-C- 4 117 574
- FR-A- 2 155 761
- FR-A- 2 581 330
- GB-A- 828 596
- US-A- 3 724 303

## Description

The invention concerns a cutting machine for the automatic cutting and turning of tubes.

It is a known fact that the cutting machines for tubes are tool machines which work by gradually removing shavings off tubes of indefinite length until these are subdivided into a plurality of tubular sleeves.

According to one of the known embodiments, said cutting machines, which usually present an automatic working cycle, essentially consist of a base which supports tube holding elements which fasten said tube innerly co-axial with a rotating head complete with cutting tools.

During the working cycle the tube remains still, the rotating head causes the cutting tools, which are attached to it, to rotate radially by means of displacing means until a tubular sleeve of the desired length is cut off the tube.

The tube cutting machines belonging to this known technique, which can be equipped with automatic devices for the loading and the feeding of the tube and for the unloading of the cut tubular sleeves, present, however, some limitations.

A first limitation consists in that said cutting machines do not allow any turning operation on the pieces, i.e. no turning operation can be performed either inside the tube nor inside the tubular sleeve at their facing ends, where the cutting operation has been performed, since said ends remain positioned very close to each other and therefore, do not allow the insertion of tools suited to perform the inner turning operations.

At best with said cutting machines belonging to this known technique, it is possible to perform at the facing ends of the cut pieces only chamfering operations on the outer edge and burring operations on the inner edge by assembling special tools on the machines themselves.

This entails the need for the tubular sleeves to be further machined on other tool machines such as for instance lathes, when it is required that said tubular sleeves are turned either on their interior or their exterior.

*FR-A-2 155 761, which represents the closest state of the art, discloses a cutting machine for tubes further comprising displacing means belonging to said cutting machine and suited to define between the two part of the cut tube a space for the passage of a pair of chamfering tools for working the edge of the cut tube. No means are provided to machine the surface of the cut tube in a parallel direction in respect of the axis of the tube.*

It is with the purpose of overcoming said limitations that the present invention is disclosed.

More specifically it is the purpose of this invention to disclose a cutting-off machine making it possible not only to cut off but also to perform inner and/or outer turning operations on the cut surfaces which face each other and belong both to the cut tubular sleeve and to the remaining section of tube.

Another purpose is that said inner and outer turning operations may be either cylindrical or bevelled.

Another purpose is to eliminate the need to machine the tubular sleeves, after they have been cut, on other tool machines in order to perform turning operations on them.

The described purposes are achieved by the cutting machine for automatic cutting and turning of tubes. The features of which are described in claim 1 -

According to the invention Each cutting saddle consists of a saddle body coupled with the body of said rotating head through at least one prismatic guide, placed orthogonally in relation to the axis of the tube being machined and it supports a cutting tool, while each turning saddle consists of a first mobile element, coupled with the body of said rotating head through at least one first prismatic guide placed orthogonally in relation to the axis of the tube being machined and of a second mobile element, coupled with said first mobile element through at least one second prismatic guide placed at a slanted position in relation to the axis of the tube being machined.

Each turning tool is attached to a cylindrical pivot coupled with said second mobile of each turning saddle and it interferes with the contrasting elements which are stationary in relation to the body of the rotating head on which each cutting saddle is applied and which are suited to permit the rotation of the cylindrical pivot and consequent rotation of each turning tool when it is in the working position.

The cutting off machine is complete with displacing means engaged with racks belonging to the saddles which, when activated, displace the saddles, thanks to their described construction shape and cause the cutting tools to move radially against the tube, while they cause the turning tools first to rotate into the working position and then to advance axially or in a longitudinally slanted direction in opposite directions so as to allow both the turning operation of the inner and/or outer surfaces of the cut tubular sleeve and of the inner and/or outer surfaces of the remaining tube facing it.

Advantageously, the cutting off machine of the invention permits to decrease the working costs as compared with analogous working cycles performed on cutting machines and lathes belonging to the known technique.

Further scope of applicability of the present invention will become apparent from the detailed description given hereinafter. However, it should be understood that the detailed description and specific example, while indicating a preferred embodiment of the invention, are given by way of illustration only.
- Fig. 1 shows a schematic view of the profile of the automatic cutting machine which is the object of the present invention;
- Fig. 2 shows the plan view of the automatic cutting machine of Fig. 1;
- Fig. 3 shows the front view of the rotating head which is part of the equipment of the cutting machine according to the invention with the corresponding tools shown in their resting position;
- Fig. 4 shows in a schematic representation the position of the cutting tools in relation to the tube being machined before the cutting step;
- Fig. 5 shows in a schematic representation the cutting step;
- Fig. 6 shows in a schematic representation the cut tubular sleeve while moving apart from the remaining tube;
- Fig. 7 shows in a schematic representation the position of the turning tools in relation to the tube being machined before the turning step;
- Fig. 8 shows the inner turning step of the end of both the tube and the cut tubular sleeve;
- Fig. 9 shows the unloading step of the sleeve after the cutting and turning operations;
- Fig. 10 shows in a schematic view and in section the rotating head according to the invention with the tube being held between the vises and the cutting tools placed in their working position before the cutting operation;
- Fig. 11 shows the rotating head of Fig. 10 during the cutting step;

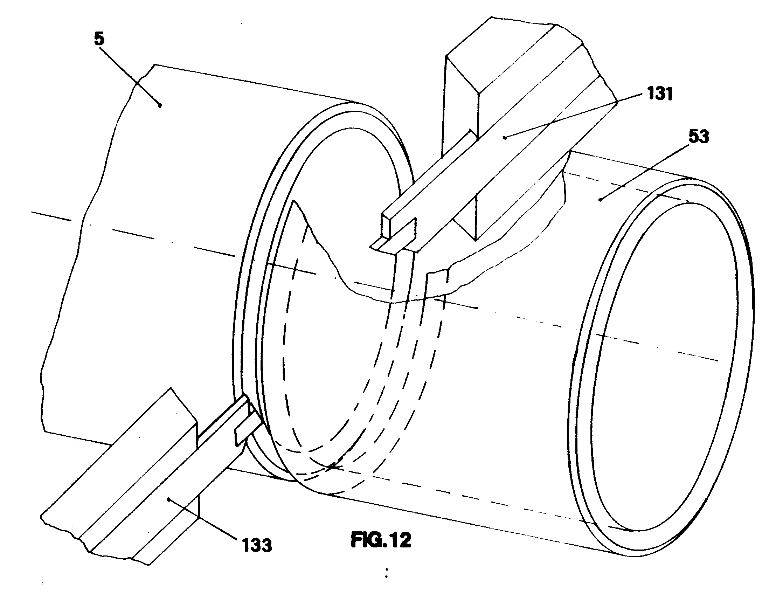

- Fig. 12 shows in an axonometric representation the cutting step;
- Fig. 13 shows in a schematic view and in section the rotating head according to the invention with the cut tubular sleeve after it has been moved apart from the remaining tube;
- Fig. 14 shows in an axonometric representation the reciprocal position of the turning tools before the turning operation;
- Fig. 15 shows in a schematic view and in section the rotating head of Fig. 13 with the turning tools at the beginning of the turning step;
- Fig. 16 shows the detail of the section of the turning saddle of Fig. 15 taken following cross section I°-I°;
- Fig. 17 shows in an axonometric representation the position of the turning tools at the beginning of the turning step.

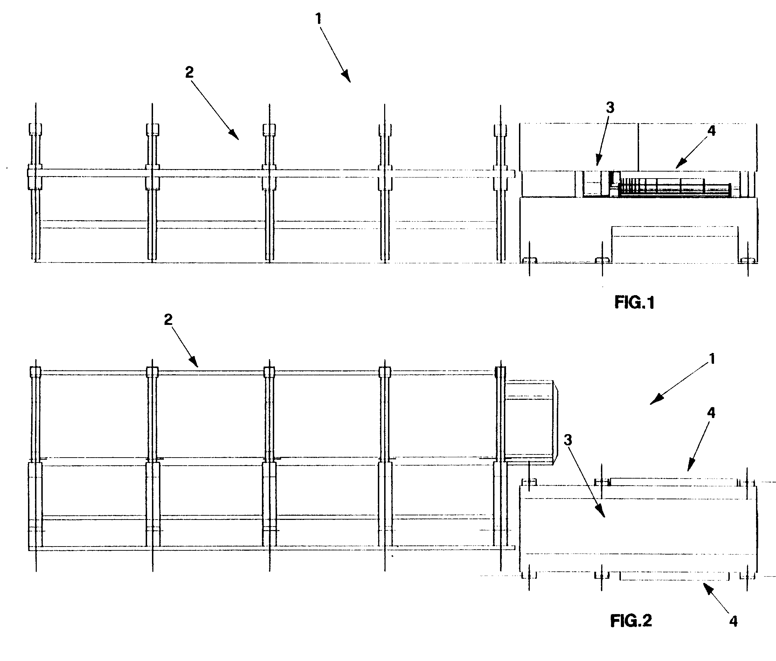

As can be observed in Fig. 1 and in Fig. 2, the automatic tube cutting machine, object of the invention, is indicated as a whole with 1 and consists of a loading unit 2 for feeding in succession the tubes to be cut inside a rotating head 3 complete with cutting tools and turning tools and of an unloading unit 4 of the cut and turned tubular sleeves.

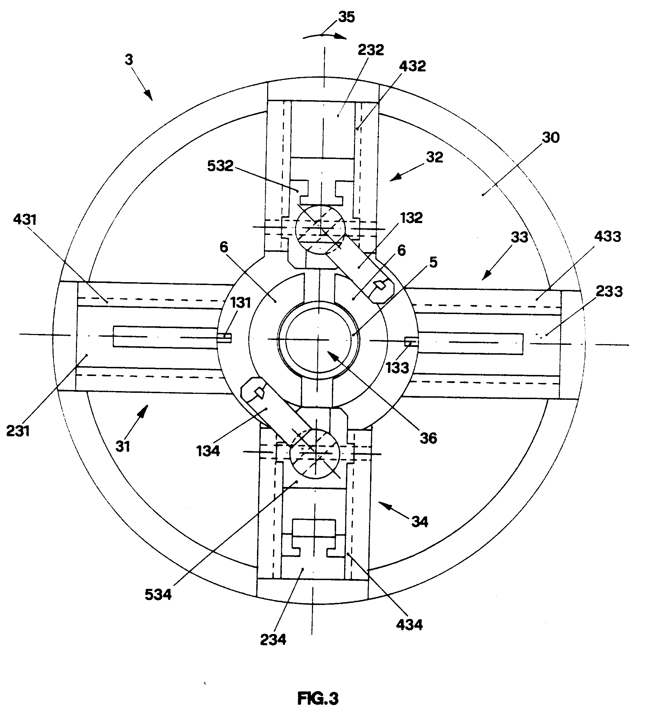

Said rotating head 3 is also visible in Fig. 3 wherein it is represented in a front view and where it can be observed that it supports a pair of cutting saddles, 31 and 33 respectively, facing each other and a pair of turning saddles, 32 and 34 respectively, also facing each other, placed orthogonally in relation to each other, each of them supporting a cutting tool 131 and 133 or a turning tool 132 and 134 respectively.

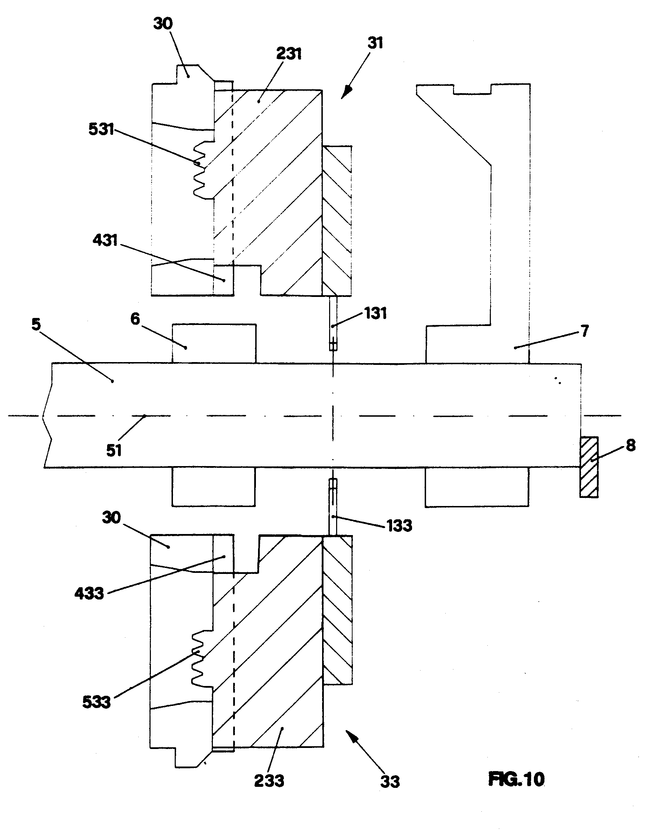

It can also be observed that said rotating head 3 which is caused to rotate, for instance following the clockwise direction 35, by means of any rotating means, presents in its middle a hole 36 through which the tube to be machined 5 is innerly arranged. Said tube, as can be observed in a better detail in the Figs. 10, 11, 13 and 15, is also placed so that it also passes inside a first vise 6 arranged in correspondence with the rotating head 3 and inside a second vise 7 arranged below said rotating head 3 near the end of said tube 5.

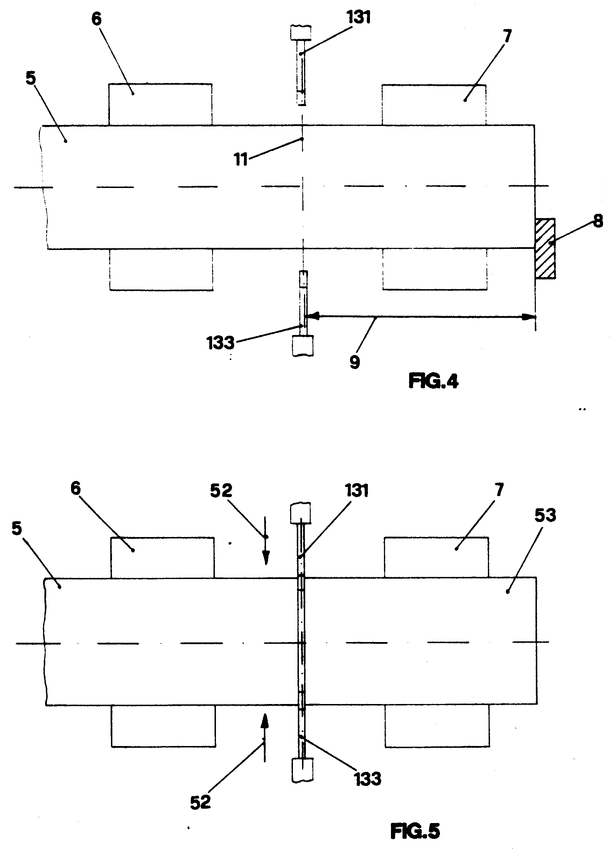

The cutting cycle of each single tubular sleeve is described with reference to the schematic views of the Figs. from 4 to 9, wherein in Fig. 4 it can be observed that the tube 5 to be machined is held between said first vise 6 and said second vise 7 in contrast against a stopping element 8 which determines the cutting length 9 of the section 53 following the cutting direction 11 in correspondence with which the cutting tools 131 and 133 are aligned.

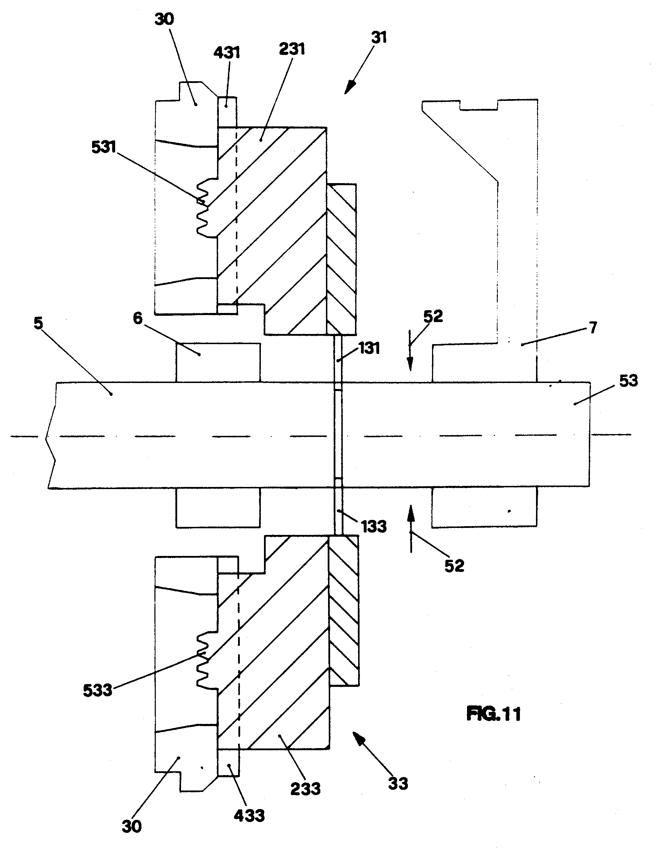

It has been said that each cutting tool is supported by a corresponding cutting saddle wherein, as can be observed in Fig. 3 and also in the Figs. 10 and 11, each of said cutting saddles 31 and 32 consists of a saddle body 231 and 233 respectively, coupled with the body 30 of said rotating head 3 through at least one prismatic guide 431 and 433 respectively, which, as can be observed in the Figures, is positioned orthogonally in relation to the axis 51 of the tube 5 being machined.

It can also be observed that each saddle body 231 and 233 moves along the corresponding prismatic guide because of a kinematic mechanism which consists of a rack, 531 and 533 respectively, belonging to the saddle body, 231 and 233 respectively, said rack engages with a toothed element attached to it, not represented in the Figure, which is driven by any operating means so as to drive the saddle bodies into the cutting radial movement following opposite directions 52, as can be observed in Fig. 5 and in Fig. 11.

The radial movement of the cutting saddles can also be realized with kinematic mechanisms other than the rack.

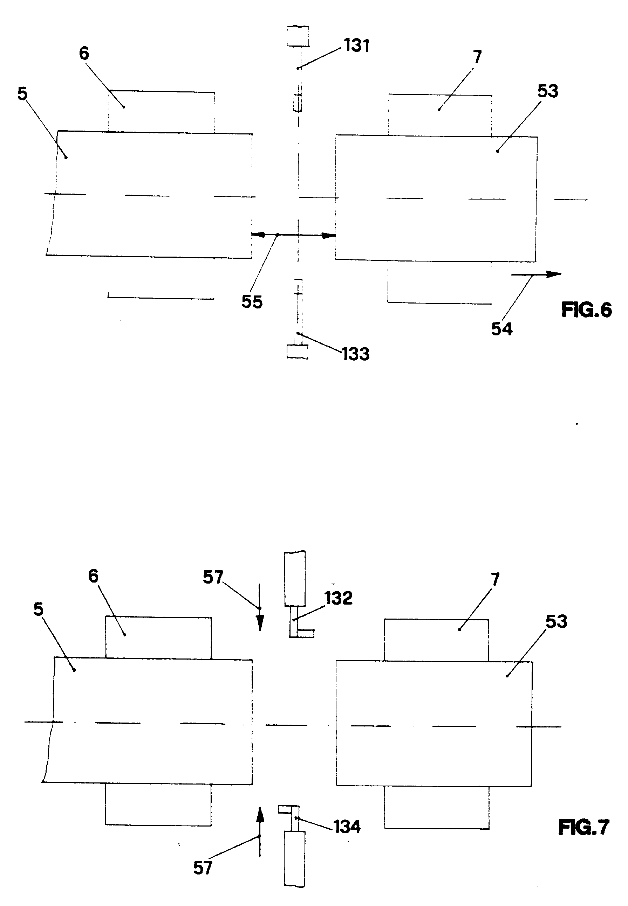

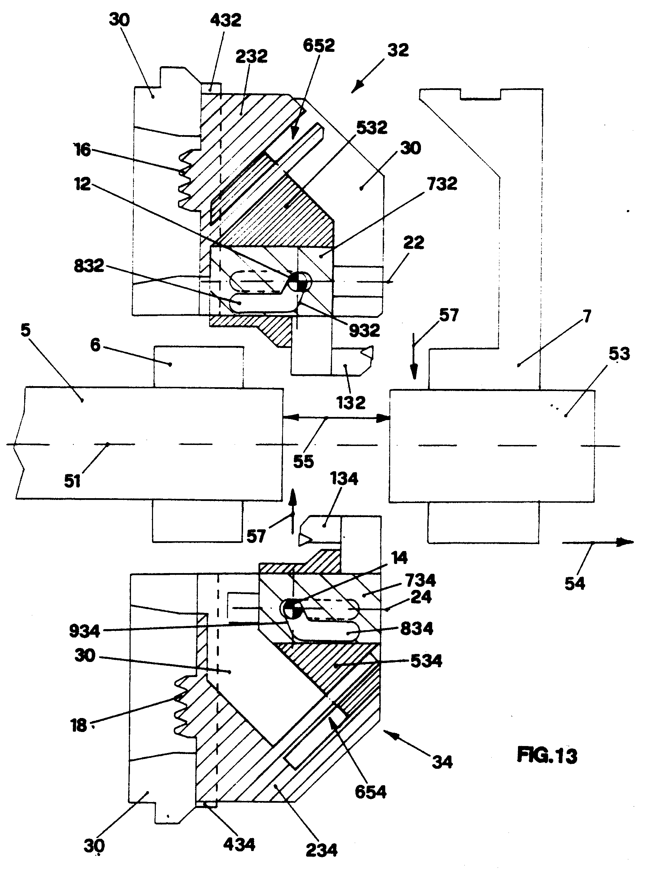

When the cutting operation has been completed, said second vise 7 displaces axially, through displacing means not represented, the cut tubular sleeve 53 following the axial direction 54, so as to define between the remaining tube 5 and the cut tubular sleeve 53 an area having a length 55 suited to permit the passage of the turning tools 132 and 134, as can be observed in Fig. 6 and in Fig. 13.

It can be observed in the Figs. 3, 13 and 15 in particular, that each of said turning tools 132 and 134 belongs to a turning saddle, already indicated with 32 and 34 respectively, which consists of a first mobile element 232 and 234 respectively coupled with the body 30 of said rotating head 3 by means of at least one first prismatic guide 432 and 434, respectively, placed orthogonally in relation to the axis 51 of the tube 5.

Each first mobile element 232 and 234 is coupled with a second mobile element 532 and 534, by means of at least one second prismatic guide 652 and 654 respectively, placed in a slanted position in relation to the same axis 51 of the tube 5 being machined, wherein said second mobile element (532) supports a corresponding turning tool 132 and 134 through a cylindrical pivot 732 and 734, respectively.

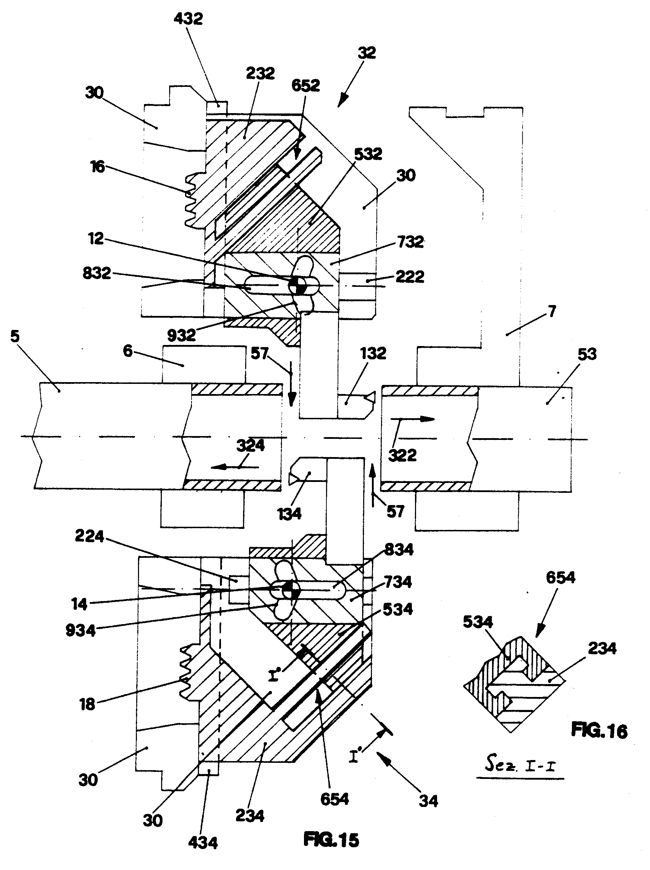

Each of said cylindrical pivots is complete with a slit 832 and 834 respectively, obtained passing diametrally, which axially extends within the body of each cylindrical pivot for a part of its length, while another section of said slit presents a helicoidal development, which in the Figs. 13 and 15 is indicated with the curving variation 932 and 934 respectively.

Finally, it can be observed that inside each of said slits is inserted a pin, 12 and 14 respectively, which is attached to the body 30 of the rotating head 3.

As in the case of each cutting saddle, also each mobile element 232 and 234 of each turning saddle 32 and 34 is complete with a rack 16 and 18 respectively, which engages with a toothed element attached to it which is driven into motion by operating means.

In this case too, kinematic mechanisms differring from a rack, but equivalent to it, can generate the movement.

Whenever said operating means of each of said racks 16 and 18 are driven into operation, each first mobile element 232 and 234 moves radially in relation to the body 30 of the rotating head following opposite directions 57, represented in the Figs. 7, 13 and 15, driven by the already mentioned first prismatic guides 432 and 434.

Simultaneously to such radial displacement, a displacement of each second mobile element 532 and 534 following the opposite axial directions 322 and 324 also occurs and this is because each second prismatic guide 652 and 654, which couples the second mobile element 532 and 534 respectively with the first mobile element 232 and 234, co-operates with a third prismatic guide 222 and 224 which further connects each second mobile element 532 and 534 to the body 30 of the rotating head 3.

Each of said third prismatic guides 222 and 224, according to the embodiment being described, is arranged parallel to the axis 51 of the tube 5 being machined and, therefore, it allows the second mobile element 532 and 534 and the tool 132 and 134 coupled with each of them, to be displaced following a movement parallel to the axis 51 of the tube 5, as already been said.

Should each of said third prismatic guides 222 and 224 be realized in a slanted position in relation to the axis 51 of the tube 5, it would permit the tool to advance following a longitudinal slanted direction in relation to the axis 51 of the tube being machined, thus realizing a bevelled turning.

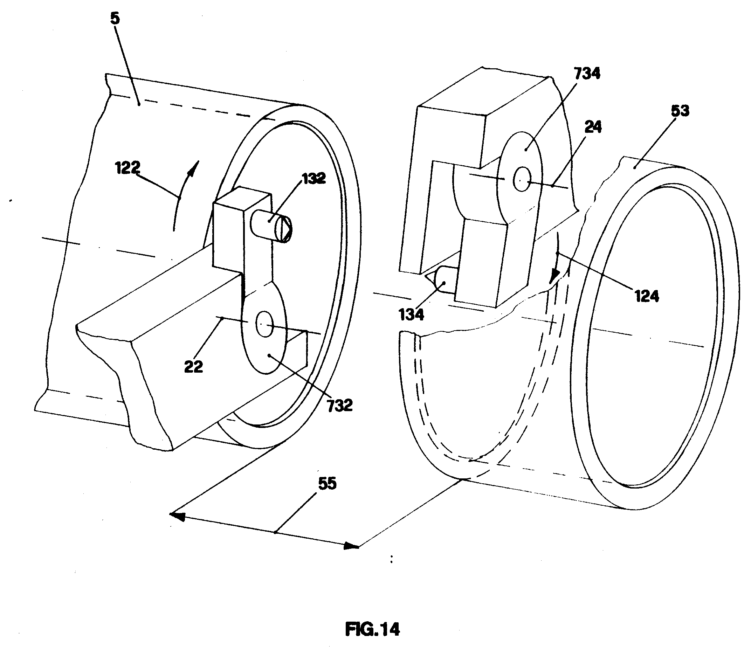

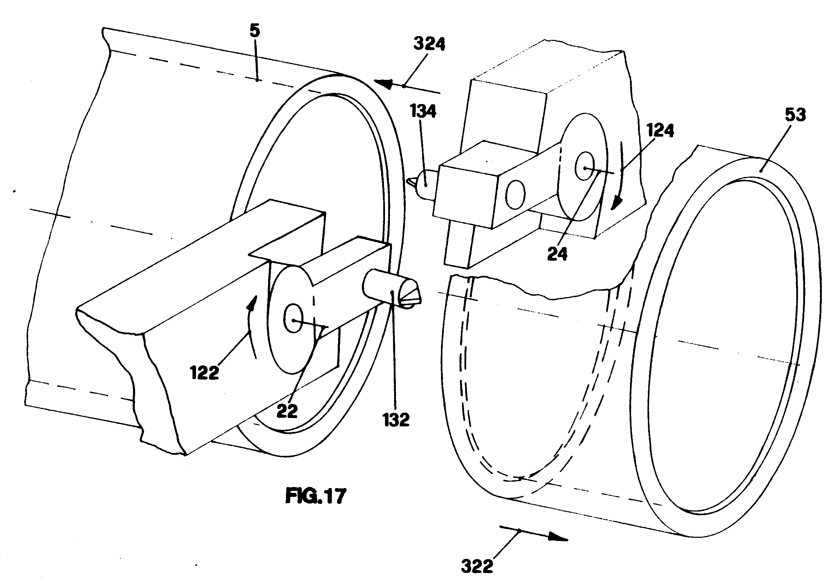

During the axial displacement 322 and 324 of each second mobile element 532 and 534, when each pin 12 and 14 contrasts against the curving variations 932 and 934 of the slits 832 and 834 within which it is inserted, it forces each pivot 732 and 734 to rotate around its own axis 22 and 24 following the directions 122 and 124 represented in Fig. 14, thus causing the rotation of the turning tools 132 and 134 into the working position represented in Fig. 17.

The rotation of the tools from the resting position into the working position occurs during the first phase of the opposite radial displacement 57 of the first mobile elements 232 and 234 of each turning saddle 32 and 34.

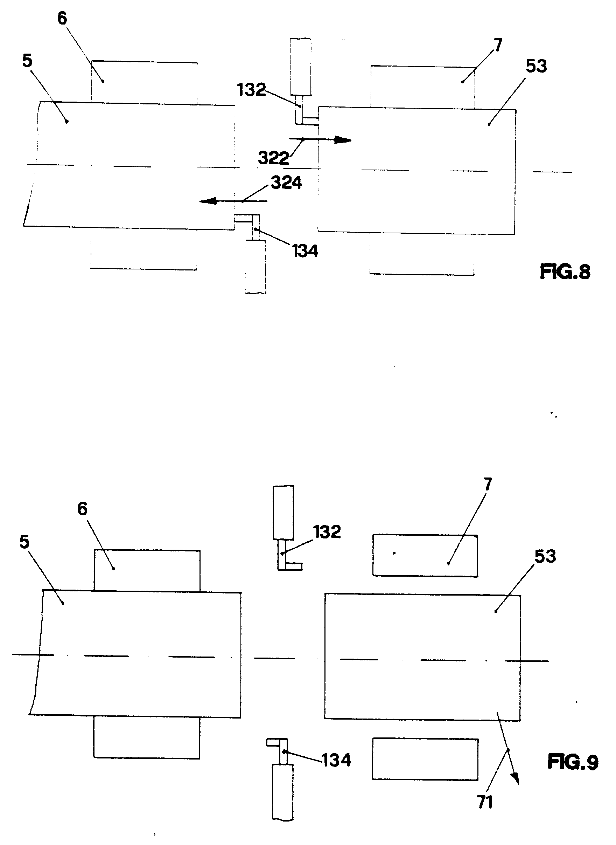

Since each of said mobile elements continues to moves following direction 57, the axial displacement of the tools performing the turning also takes place, because of the combined action of said radial motion 57 with said axial motion 322 and 324, as can be observed in Fig. 8.

It is evident that according to the type of tool, its dimensions and its shape, the turning can be performed either on the interior or the exterior.

When the turning operation has been completed, the displacing means of the racks 16 and 18 will reverse their movement and cause the turning tools 132 and 134 to resume their resting position, as represented in the Figs. 9, 13 and 14 during which, as can be observed in detail in Fig. 9, the cut and turned tubular section 53 is also unloaded following direction 71 by opening the vise 7.

The vise 7 resumes a position suited to fasten again the tube 5, after the latter has been made to advance against the stopping element 8 which, of course, must come to a halt simultaneously with the vise 7.

At this point a new cutting and turning cycle starts again which can be repeated an unlimited number of times, depending on the choice of the user.

According to what has been described, it is understood how the cutting machine, object of the present invention, reach all the proposed purposes.

In fact, in the cutting machine according to the invention a mobile vise 7 is present, which supports the tubular section 53 after it has been cut and which permits to axially move it in relation to the remaining tube 5 so as to open, between the facing cutting surfaces, a space 55 through which the turning tools suited to machine both the tube 5 and the cut tubular sleeve 53 are inserted.

In such a way the need for the tubular sleeves to be further manipulated, assembled and machined on other tool machines is eliminated.

It could also be seen that by properly slanting the third prismatic guides 222 and 224 which couple each second mobile element 532 and 534 with the body 30 of the rotating head 3, it is also possible to perform bevelled turnings both on the interior and on the exterior.

It is pointed out that in the description reference has been made to a cutting machine, the rotating head of which is complete with four opposite saddles, placed at 90° in relation to each other.

In a different embodiment the rotating head can be complete with any number of saddles and corresponding tools, even differring from each other, also suited to perform machining operations which differ from the described machining operations.

During the construction step the machine and in particular its rotating head and the saddles which support the tools, may undergo modifications with the purpose of improving its operation or to make the construction less costly.

However, it is to be understood that all possible modifications are to be considered within the present invention.

## Claims

1. A cutting-off machine for automatic cutting and turning of tubes comprising:
- a rotating head (3) equipped with saddles (31, 33; 32, 34) for the support of said at least one cutting tool (131, 133) and of at least a pair of turning tools (132, 134), the body (30) of said rotating head (3) presenting a through hole (36) suited to receive a tube (5) to be machined;
- a first vise (6) suited to hold said tube (5) placed in correspondence with said rotating head (3);
- a second vise (7) suited to hold said tube (5) at its end and placed below said rotating head (3) and co-axial with said first vise (6), and able to be moved axially in relation to said first vise (6), through displacing means, while the first vise (6) is stationary in relation to the cutting machine;
- at least one cutting saddle (31, 33) supporting at least one cutting tool (131, 133) and at least a pair of turning saddles (32, 34), each of them supporting at least one turning tool (132, 134), said saddles belonging to said rotating head (3) and being provided with kinematic mechanisms suited to permit the advancement motion of each of said tools,
**characterized in that** each of said turning saddles (32, 34) consists of a first mobile element (232, 234) coupled with the body (30) of said rotating head (3) by means of at least one first prismatic guide (432, 434) placed hortogonally in relation to the axis (51) of the tube (5) to be machined and of a second mobile element (532, 534) coupled with said first mobile element by means of at least one second prismatic guide (652, 654), placed in a slanted position in relation to the axis (51) of the same tube (5) to be machined and to said body (30) of said rotating head (3), and co-operating with at least one third prismatic guide (222, 224), which further connects each second mobile element (532, 534) to the body (30) of the rotating head (3), said prismatic guides being suited to realize the longitudinal and radial combined advancing movement of each of said at least one turning tool (132, 134) attached to said saddle, each turning tool (132, 134) being attached to the second mobile element (532, 534) of the turning saddle (32, 34) to which it is joined by means of a cylindrical pivot (732, 734) rotatingly coupled with said second mobile element (532, 534), said cylindrical pivot presenting a slit (832, 834) passing diametrally, inside which a pin (12, 14) attached to the body (30) of said rotating head (3) is slidingly coupled, wherein each slit (832, 834) presents a part which extends with a parallel development in relation to the axis (22, 24) of the cylindrical pivot and a part which extends with a helicoidal development realizing a curving variation (932, 934) of the slit itself, said pin (12, 14) and said curving (932, 934) of said slit being suited, by co-operating with each other, to cause the rotation of said cylindrical pivot (732, 734) around its own axis (22, 24) during a first phase of the displacement of the said second mobile element (532, 534).

2. A cutting machine according to claim 1, **characterized in that** each of said cutting saddles (31, 33) consists of a saddle body (231, 233) coupled with the body (30) of said rotating head (3) through at least one prismatic guide (431, 433) placed hortogonally in relation to the axis (51) of the tube (5) being machined, said prismatic guide being suited to realize the radial advancing movement of said at least one cutting tool (131, 133) attached to said saddle.

3. A cutting machine according to claim 1, **characterized in that** each of said third prismatic guides (222, 224) is placed parallel in relation to the axis (51) of the tube (5) to be machined.

4. A cutting machine according to claim 1, **characterized in that** each of said third prismatic guides (222, 224) is placed slanted in relation to the axis (51) of the tube (5) to be machined.

5. A cutting machine according to claim 1 or 2, **characterized in that** each of said saddles (31, 33; 32, 34) are opposite to each other in pairs.

6. A cutting machine according to claim 1, **characterized in that** each of said kinematic mechanisms consists of a rack (531, 533; 16, 18) belonging to the saddle (31, 33; 32, 34), and couples with a toothed element joined to it and belonging to the rotating head (3), said element being driven by operating means.

7. A cutting machine according to claim 2, **characterized in that** each cutting tool (131, 133) is attached to the saddle body (231, 233) of the cutting saddle (31, 33) to which it is attached by means of holding elements.

## Patentansprüche

1. Eine Schneidemaschine zum automatischen Schneiden und Drehen von Rohren, folgendes umfassend:
- einen Drehkopf (3) mit Schlitten (31, 33; 32, 34) als Träger von wenigstens einem Schneidwerkzeug (131, 133) und von wenigstens einem Paar Drehwerkzeuge (132, 134), wobei der Körper (30) des Drehkopfes (3) ein durchgehendes Loch (36) aufweist, das ein zu bearbeitendes Rohr (5) aufnehmen kann;
- einen ersten Schraubstock (6) zum Halten des Rohrs (5), in Entsprechung mit dem Drehkopf (3) positioniert;
- einen zweiten Schraubstock (7) zum Halten des Rohrs (5) an dessen Ende, unter dem Drehkopf (3) und koaxial zu dem ersten Schraubstock (6) positioniert und in der Lage, mittels einer Verstellvorrichtung axial bezüglich des ersten Schraubstocks (6) bewegt zu werden, während der erste Schraubstock (6) hinsichtlich der Schneidemaschine fest steht;
- wenigstens einen Schneidschlitten (31, 33), der wenigstens ein Schneidwerkzeug (131, 133) trägt und wenigstens ein Paar Drehschlitten (32, 34), von denen jeder wenigstens ein Drehwerkzeug (132, 134) trägt, wobei diese Schlitten zum Drehkopf (3) gehören und mit kinematischen Mechanismen versehen sind, die den Vorschub jedes der besagten Werkzeuge erlauben,
**dadurch gekennzeichnet, daß** jeder der Drehschlitten (32, 34) aus einem ersten, beweglichen Element (232, 234) besteht, das mit dem Körper (30) des Drehkopfes (3) über wenigstens eine erste V-Führungsbahn (432, 434), verbunden ist, welche orthogonal zur Achse (51) des zu bearbeitenden Rohrs (5) angeordnet ist, sowie aus einem zweiten, beweglichen Element (532, 534), das mit dem ersten, beweglichen Element durch wenigstens eine zweite V-Führungsbahn (652, 654) verbunden ist, die in einer bezüglich der Achse (51) des zu bearbeitenden Rohrs (5) selbst und des Körpers (30) des Drehkopfs (3) schrägen Position positioniert ist und mit wenigstens einer dritten V-Führungsbahn (222, 224), die weiterhin jedes zweite, bewegliche Element (532, 534) mit dem Körper (30) des Drehkopfs (3) verbindet, zusammenwirkt, wobei die V-Führungsbahnen geeignet sind, die längs und radial verlaufende, kombinierte Vorschubbewegung jedes des wenigstens einen, an dem Schlitten befestigten Drehwerkzeugs (132, 134) zu bewirken, wobei jedes Drehwerkzeug am zweiten, beweglichen Element (532, 534) des Drehschlittens (32, 34) befestigt ist, mit dem es mittels eines zylindrischen Drehzapfens (732, 734) verbunden ist, welcher drehend mit dem zweiten, beweglichen Element (532, 534) gekuppelt ist, wobei der Drehzapfen einen diametral verlaufenden Schlitz (832, 834) aufweist, in dem ein am Körper (30) des Drehkopfs (3) befestigter Stift (12, 14) gleitend gekuppelt ist, und wobei jeder Schlitz (832, 834) einen Teil aufweist, der sich mit parallelem Verlauf zur Achse (22, 24) des zylindrischen Drehzapfens erstreckt, und einen Teil, der mit schraubenförmigem Verlauf eine gekrümmte Variation (932, 934) des Schlitzes selbst beschreibt, wobei dieser Stift (12, 14) und die Krümmung (932, 934) des besagten Schlitzes geeignet sind, während einer ersten Phase der Verstellung des zweiten, beweglichen Elements (532, 534) durch Zusammenwirken miteinander die Drehung des zylindrischen Drehzapfens (732, 734) um seine eigene Achse (22, 24) zu bewirken.

2. Eine Schneidemaschine gemäß Patentanspruch 1, **dadurch gekennzeichnet, daß** jeder der Schneidschlitten (31, 33) aus einem Schlittenkörper (231, 233) besteht, der mit dem Körper (30) des Drehkopfes (3) über wenigstens eine V-Führungsbahn (431, 433) gekuppelt ist, die orthogonal zur Achse (51) des zu bearbeitenden Rohrs (5) steht, wobei diese V-Führungsbahn geeignet ist, die radiale Vorschubbewegung des wenigstens einen, an dem Schlitten befestigten Schneidwerkzeugs (131, 133) durchzuführen.

3. Eine Schneidemaschine gemäß Patentanspruch 1, **dadurch gekennzeichnet, daß** jede der besagten dritten V-Führungsbahnen (222, 224) parallel zur Achse (51) des zu bearbeitenden Rohrs (5) positioniert ist.

4. Eine Schneidemaschine gemäß Patentanspruch 1, **dadurch gekennzeichnet, daß** jede der besagten dritten V-Führungsbahnen (222, 224) bezüglich der Achse (51) des zu bearbeitenden Rohrs (5) schräg positioniert ist.

5. Eine Schneidemaschine gemäß Patentanspruch 1 oder 2, **dadurch gekennzeichnet, daß** alle Schlitten (31, 33; 32, 34) einander paarweise gegenüberliegen.

6. Eine Schneidemaschine gemäß Patentanspruch 1, **dadurch gekennzeichnet, daß** jeder der kinematischen Mechanismen aus einem Gestell (531, 533; 16, 18) besteht, das zu dem Schlitten (31, 33; 32, 34) gehört, und mit einem gezahnten, mit ihm verbundenen und zu dem Drehkopf (3) gehörigen Element, gekuppelt wird, wobei dieses Element durch Betätigungselemente angetrieben wird.

7. Eine Schneidemaschine gemäß Patentanspruch 2, **dadurch gekennzeichnet, daß** jedes Schneidwerkzeug (131, 133) mit Halteelementen am Körper (231, 233) des Schneidschlittens (31, 33) befestigt ist.

## Revendications

1. Une machine pour le tronçonnage et le tournage automatique de tuyaux comprenant:
- une tête pivotante (3) équipée de glissières (31, 33; 32, 34) indiquées pour soutenir ledit au moins un équipement de tronçonnage (131, 133) et au moins une paire d'équipements de tournage (132, 134), le corps (30) de ladite tête pivotante (3) présentant un trou passant (36) indiqué pour recevoir un tuyau (5) à usiner;
- un premier étau (6) indiqué pour maintenir ledit tuyau (5) positionné au niveau de ladite tête pivotante (3);
- un deuxième étau (7) indiqué pour maintenir ledit tuyau (5) à son extrémité et positionné au-dessous de ladite tête pivotante (3) et de manière coaxiale par rapport audit premier étau (6), et capable d'être déplacé axialement par rapport audit premier étau (6), à travers des moyens de déplacement, tandis que le premier étau (6) est fixe par rapport à la tronçonneuse;
- au moins un support de tronçonnage (31, 33) soutenant au moins un équipement de tronçonnage (131, 133) et au moins une paire de glissières de tournage (32, 34), chacune desquelles soutenant au moins un équipement de tournage (132, 134), lesdites glissières appartenant à ladite tête pivotante (3) et étant équipées de mécanismes cinématiques indiqués pour permettre l'avance de chacun desdits équipements,
**caractérisée en ce que** chacune desdites glissières de tournage (32, 34) se compose d'un premier élément mobile (232, 234) accouplé au corps (30) de ladite tête pivotante (3) au moyen d'au moins un premier coulisseau prismatique (432, 434) placé de manière orthogonale par rapport à l'axe (51) du tuyau (5) à usiner et au moyen d'un deuxième élément mobile (532, 534) accouplé audit premier élément mobile à travers au moins un deuxième coulisseau prismatique (652, 654), placé en position inclinée par rapport à l'axe (51) du même tuyau (5) à usiner et par rapport audit corps (30) de ladite tête pivotante (3), et interagissant avec au moins un troisième coulisseau prismatique (222, 224), qui relie ultérieurement chaque deuxième élément mobile (532, 534) au corps (30) de la tête pivotante (3), lesdits coulisseaux prismatiques étant indiqués pour réaliser l'avance combinée longitudinale et radiale de chacun desdits au moins un équipement de tournage (132, 134) fixé à ladite glissière, chaque équipement de tournage (132, 134) étant fixé au deuxième élément mobile (532, 534) de la glissière de tournage (32, 34) à laquelle il est relié au moyen d'un pivot cylindrique (732, 734) accouplé de manière pivotante audit deuxième élément mobile (532, 534), ledit pivot cylindrique présentant une entaille (832, 834) qui passe diamétriquement, dans laquelle une broche (12, 14) fixée au corps (30) de ladite tête pivotante (3) est accouplée de manière coulissante, où chaque entaille (832, 834) présente une partie s'étendant avec un développement parallèle par rapport à l'axe (22, 24) du pivot cylindrique et une partie s'étendant avec un développement hélicoïdal réalisant une variation de courbure (932, 934) de la même entaille, ladite broche (12, 14) et ladite courbure (932, 934) de ladite entaille étant indiquées, en interagissant l'une avec l'autre, pour réaliser la rotation dudit pivot cylindrique (732, 734) autour de son axe (22, 24) durant une première phase de déplacement dudit deuxième élément mobile (532, 534).

2. Une machine pour le tronçonnage selon la revendication 1, **caractérisée en ce que** chacune desdites glissières de tronçonnage (31, 33) se compose d'un corps de la glissière (231, 233) accouplé au corps (30) de ladite tête pivotante (3) au moyen d'au moins un coulisseau prismatique (431, 433) placé de manière orthogonale par rapport à l'axe (51) du tuyau (5) étant usiné, ledit coulisseau prismatique étant indiqué pour réaliser l'avance radiale dudit au moins un équipement de tronçonnage (131, 133) fixé à ladite glissière.

3. Une machine pour le tronçonnage selon la revendication 1, **caractérisée en ce que** chacun desdits troisièmes coulisseaux prismatiques (222, 224) est placé parallèlement par rapport à l'axe (51) du tuyau (5) à usiner.

4. Une machine pour le tronçonnage selon la revendication 1, **caractérisée en ce que** chacun desdits troisièmes coulisseaux prismatiques (222, 224) est placé de manière inclinée par rapport à l'axe (51) du tuyau (5) à usiner.

5. Une machine pour le tronçonnage selon la revendication 1 ou 2, **caractérisée en ce que** chaque glissière (31, 33; 32, 34) est opposée l'une l'autre, deux à deux.

6. Une machine pour le tronçonnage selon la revendication 1, **caractérisée en ce que** chacun desdits mécanismes cinématiques se compose d'une crémaillière (531, 533; 16, 18) appartenant à la glissière (31, 33; 32, 34) et s'accouple avec un élément denté relié à celui-ci et appartenant à la tête pivotante (3), ledit élément étant conduit par des moyens de fonctionnement.

7. Une machine pour le tronçonnage selon la revendication 2, **caractérisée en ce que** chaque équipement de tronçonnage (131, 133) est fixé au corps de la glissière (231, 233) de la glissière de tronçonnage (31, 33) à laquelle il est fixé au moyen d'éléments de maintien.
